# EUROPEAN PATENT APPLICATION

(11) **EP 4 642 031 A1**
(43) Date of publication of application: **29.10.2025**
(21) Application number: 23905962.9
(22) Date of filing: 19.12.2023
(51) Int. Cl.: H04N 21/431, H04N 21/466

(54) **VIDEO PLAYING METHOD AND APPARATUS, ELECTRONIC DEVICE, AND COMPUTER-READABLE MEDIUM**

(30) Priority: 19.12.2022 CN 202211634740
(71) Applicant: Beijing Zitiao Network Technology Co., Ltd., Beijing 100190 (CN)
(72) Inventor: CAO, Anping, Beijing 100028 (CN); WU, Di, Beijing 100028 (CN); ZHANG, Zeqian, Beijing 100028 (CN); HAN, Jiadong, Beijing 100028 (CN)
(74) Representative: Isarpatent
(86) International application number: PCT/CN2023/139953
(87) International publication number: WO 2024/131799

(57) **Abstract**

The present application discloses a video playing method and apparatus, an electronic device, and a computer-readable medium. The method includes: when an information aggregation interface is displayed on the electronic device, displaying event identification information of at least one candidate hot event on the information aggregation interface, so that when the event identification information of a first hot event of the candidate hot events is in a selected state, at least one candidate video identification corresponding to the first hot event is further displayed on the information aggregation interface, and the candidate video identifications can indicate which video data is associated with the first hot event; and when a first video identification of the candidate video identifications is in a selected state, video data corresponding to the first video identification is played on the information aggregation interface, so that the video data can reflect relevant content of the first hot event. Therefore, the purpose of displaying, to a user, video data corresponding to a hot event can be achieved, which is conductive to enhancing the user experience.

## Description

This application claims priority to Chinese Patent Application No. 202211634740.1, entitled "VIDEO PLAYING METHOD AND APPARATUS, ELECTRONIC DEVICE, AND COMPUTER-READABLE MEDIUM", filed with the China National Intellectual Property Administration on December 19, 2022, which is incorporated by reference in its entirety.

### FIELD

The present application relates to the technical field of Internets, and in particular, to a video playing method and apparatus, an electronic device, and a computer-readable medium.

### BACKGROUND

For some Internet technology application scenarios (e.g. a smart TV), video data corresponding to some hot events can be recommended on video playing devices (e.g. a TV and a mobile phone), so that users can watch the video data with the help of the video playing devices.

However, in terms of an information display scheme for hot events, since the information display scheme has a shortcoming of single interaction, the efficiency of obtaining relevant information (e.g. video data) of a hot topic by a user is relatively low, which affects a user experience.

### SUMMARY

To solve the above technical problem, the present application provides a video playing method and apparatus, an electronic device, and a computer-readable medium.

To achieve the above objectives, a technical solution provided by the present application is as follows:

The present application provides a video playing method, including:
displaying an information aggregation interface, wherein event identification information of at least one candidate hot event is displayed on the information aggregation interface; the at least one candidate hot event includes a first hot event; the event identification information of the first hot event is in a selected state;
displaying at least one candidate video identification corresponding to the first hot event on the information aggregation interface, wherein different candidate video identifications correspond to different pieces of video data; the at least one candidate video identification includes a first video identification and a second video identification; the first video identification is in a selected state; the second video identification is in an unselected state; and
playing video data corresponding to the first video identification on the information aggregation interface.

In a possible implementation, the method further includes:
receiving a selection operation for the second video identification;
switching the selected state of the first video identification to an unselected state, and switching the unselected state of the second video identification to a selected state; and
switching the video data played on the information aggregation interface to video data corresponding to the second video identification.

In a possible implementation, displaying the at least one candidate video identification corresponding to the first hot event on the information aggregation interface includes:
displaying the at least one candidate video identification corresponding to the first hot event on the information aggregation interface according to a first arrangement direction;
wherein the method further includes:
in response to a triggering operation for the first video identification, displaying a video display interface;
   or,
in response to a triggering operation for the event identification information of the first hot event, displaying the video display interface;
   or,
in response to a triggering operation for the video data corresponding to the first video identification, displaying the video display interface;
wherein video data corresponding to the first video identification is displayed on the video display interface; and the video display interface is used for displaying the at least one candidate video identification according to a second arrangement direction.

In a possible implementation, the method further includes:
receiving a selection operation for the second video identification from the video display interface; and
switching the video data that is played on the video display interface and corresponds to the first video identification to video data to video data corresponding to the second video identification.

In a possible implementation, event associated information of the first hot event and/or video associated information of the video data corresponding to the first video identification are further displayed on the video display interface.

In a possible implementation, after displaying the video display interface, the method further includes:
in response to a preset screen clear condition being satisfied, performing screen clear processing on the video display interface to cause that the at least one candidate video identification does not exist on the video display interface after the screen clear processing.

In a possible implementation, after performing the screen clear processing on the video display interface, the method further includes:
in response to a first event switching operation for the video display interface, updating displayed content on the video display interface to to-be-displayed video data corresponding to the second hot event, wherein the second hot event is a next hot event or a previous hot event corresponding to the first hot event.

In a possible implementation, after displaying the video display interface, the method further includes:
in response to a second event switching operation for triggering the video display interface, updating displayed content on the video display interface to a to-be-displayed object corresponding to the second hot event, wherein the second hot event is a next hot event or a previous hot event corresponding to the first hot event.

In a possible implementation, after displaying the video display interface, the method further includes:
in response to a preset operation for triggering the video display interface, displaying a video playing control interface; and
displaying, on the video playing control interface, at least one information aggregation card corresponding to some or all of the at least one candidate hot event.

In a possible implementation, the method further includes:
in response to a triggering operation for a target aggregation card of the at least one information aggregation card, displaying to-be-played video data corresponding to the target aggregation card on the video playing control interface.

The present application provides a video playing apparatus, including:
a first display unit, configured to display an information aggregation interface, wherein event identification information of at least one candidate hot event is displayed on the information aggregation interface; the at least one candidate hot event includes a first hot event; the event identification information of the first hot event is in a selected state;
a second display unit, configured to display at least one candidate video identification corresponding to the first hot event on the information aggregation interface, wherein different candidate video identifications correspond to different pieces of video data; the at least one candidate video identification includes a first video identification and a second video identification; the first video identification is in a selected state; the second video identification is in an unselected state; and
a video playing unit, configured to play video data corresponding to the first video identification on the information aggregation interface.

The present application provides an electronic device, including a processor and a memory.

The memory is configured to store instructions or a computer program; and
the processor is configured to execute the instructions or the computer program stored in the memory to cause the electronic device to perform the video playing method provided by the present application.

The present application provides a computer-readable medium, having instructions or a computer program stored thereon. When the instructions or the computer program is run on a device, the device is caused to perform the video playing method provided by the present application.

The present application further provides a computer program product, including a computer program carried on a non-transient computer-readable medium. The computer program includes program codes used for performing the video playing method provided by the present application.

### BRIEF DESCRIPTION OF THE DRAWINGS

To describe the technical solutions in the embodiments of the present application or in the related art more clearly, the following briefly introduces the accompanying drawings for describing the embodiments or the related art. Apparently, the accompanying drawings in the following description show merely some embodiments recorded in the present application, and a person of ordinary skill in the art may still derive other drawings from the accompanying drawings without creative efforts.
FIG. 1 is a flowchart of a video playing method provided by an embodiment of the present application;
FIG. 2 is a schematic diagram of an information aggregation interface provided by an embodiment of the present application;
FIG. 3 is a schematic diagram of another information aggregation interface provided by an embodiment of the present application;
FIG. 4 is a schematic diagram of a video display interface provided by an embodiment of the present application;
FIG. 5 is a schematic diagram of another video display interface provided by an embodiment of the present application;
FIG. 6 is a schematic diagram of a video playing control interface provided by an embodiment of the present application;
FIG. 7 is a schematic diagram of a video display interface in a screen clear state provided by an embodiment of the present application;
FIG. 8 is a schematic diagram of still another video display interface provided by an embodiment of the present application;
FIG. 9 is a schematic diagram of yet another video display interface provided by an embodiment of the present application;
FIG. 10 is a schematic diagram of a further video display interface provided by an embodiment of the present application;
FIG. 11 is a schematic structural diagram of a video playing apparatus provided by an embodiment of the present application; and
FIG. 12 is a schematic structural diagram of an electronic device according to an embodiment of the present application.

### DETAILED DESCRIPTION OF EMBODIMENTS

To make a person skilled in the art to better understand the solutions of the present application, the technical solutions in the embodiments of the present application are clearly and completely described below with reference to the accompanying drawings in the embodiments of the present application. Apparently, the described embodiments are merely some rather than all the embodiments of the present application. All other embodiments obtained by a person of ordinary skill in the art based on the embodiments of the present application without making creative efforts shall fall within the protection scope of the present application.

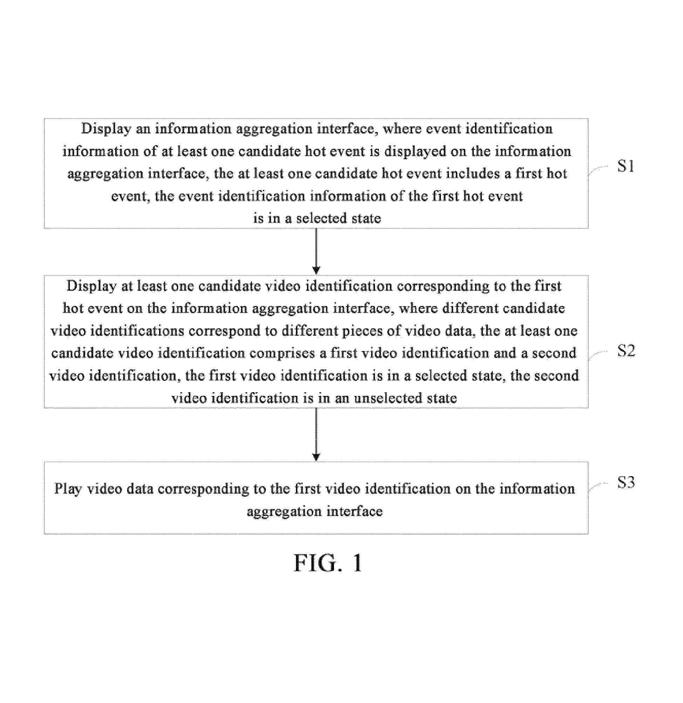

For ease of understanding the technical solutions provided by the present application, the following will make an explanation to a video playing method provided by the present application in conjunction with the accompanying drawings. As shown in FIG. 1, the video playing method provided by an embodiment of the present application includes S1 to S3 below. FIG. 1 is a flowchart of a video playing method provided by an embodiment of the present application.

S1: An information aggregation interface is displayed. Event identification information of at least one candidate hot event is displayed on the information aggregation interface, the at least one candidate hot event includes a first hot event, and the event identification information of the first hot event is in a selected state.

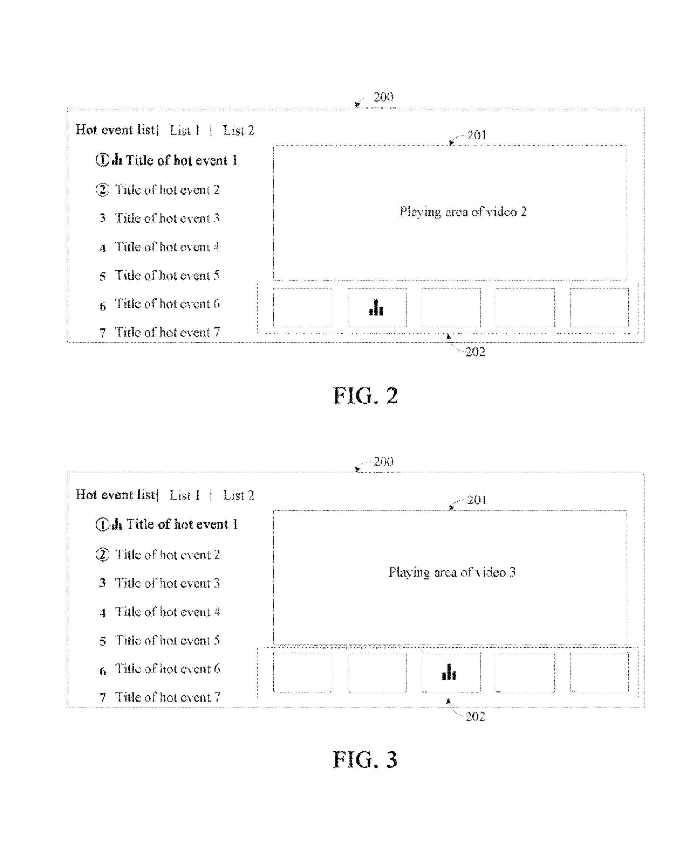

The information aggregation interface is used for aggregating and displaying relevant information (e.g. an event title, an associated video, and a rank) of a plurality of hot events. The event title is used for identifying a hot event using a character string. The associated video is used for introducing the hot event with video data. The rank is used for indicating a level of attention to the hot event. It can be seen that in a possible implementation, the information aggregation interface (e.g. a hot event list interface 200 shown in FIG. 2) can be used for displaying a hot event ranking list. The hot event ranking list is a list obtained by ranking the levels of attention to some hot events (e.g. a hot event list shown in FIG. 2).

In fact, to better enhance a display effect of the hot events, the event identification information of the at least one candidate hot event may be displayed on the above information aggregation interface. The candidate hot event means a hot event that can display information on the information aggregation interface (e.g. hot event 1 to hot event 7 shown in FIG. 2). The event identification information of an n-th candidate hot event is used for identifying the nth candidate hot event, so that by using the event identification information of the nth candidate hot event, a user can know what the nth candidate hot event is what. Moreover, the present application does not limit the "event identification information of the nth candidate hot event". For example, the event identification information can be implemented using the event title (e.g. a title shown in FIG. 2) of the nth candidate hot event Where n is a positive integer, n ≤ N, and N is a positive integer. N represents a number of events in the "at least one candidate hot event".

In fact, for the above "at least one candidate hot event", the at least one candidate hot event may include a first hot event (e.g. hot event 1 shown in FIG. 2) and a third hot event (e.g. another hot event except hot event 1 shown in FIG. 2). The event identification information of the first hot event is in a selected state (e.g. the state of "Title of hot event 1" shown in FIG. 2), and the event identification information of the third hot event is in an unselected state (e.g. the state of "Title of hot event 2" shown in FIG. 2). For ease of understanding, the following will introduce the relevant content of the two hot events.

For the above first hot event, the first hot event may represent a hot event that is currently in the selected state. Moreover, the present application does not limit a determining process of the first hot event. For example, the first hot event may be determined based on a preset default event selection configuration (e.g. a configuration of automatically selecting a top-ranked hot event on the list). For another example, the first hot event may also be determined based on an event selection operation triggered by the user on these candidate hot events. In addition, the present application does not limit an indication mode of the state of the first hot event. For example, in a possible implementation, a purpose of accurately conveying, to the user, that the first hot event is in the selected state can be achieved in a manner of the event identification information of the first hot event being in the selected state.

It should be noted that the present application does not limit an indication mode of the selected state of the above event identification information. For example, indication may be implemented in any related or future manner of highlighting the selected event identification information. For another example, indication may be implemented using a highlighting mode shown in FIG. 2 for "Title of hot event 1".

For the above third hot event, the third hot event may represent a hot event that is currently in an unselected state. Moreover, the present application does not limit the third hot event. For example, the third hot event may be all other hot events in the above "at least one candidate hot event", except the first hot event. In addition, the present application does not limit a number of the third hot event. For example, the number of the third hot event is equal to the number of events in the above "at least one candidate hot event" minus one. In addition, the present application does not limit an indication mode of the state of the third hot event. For example, in a possible implementation, a purpose of accurately conveying, to the user, that the third hot event is not in the selected state may be achieved in a manner of the event identification information of the third hot event being in the unselected state.

It should be noted that the present application does not limit an indication mode of the unselected state of the above event identification information. For example, indication can be implemented in any related or future manner of indicating the unselected event identification information. For another example, indication may be implemented using a non-highlighting mode shown in FIG. 2 for "Title of hot event 2".

In addition, the present application does not limit an aggregation mode of the above "event identification information of the at least one candidate hot event". For example, the aggregation may be implemented using a list (e.g. the hot event list shown in FIG. 2). Namely, in a possible implementation, a hot event aggregation list may be displayed on the information aggregation interface above, so that the hot event aggregation list can aggregate and display the event identification information of these candidate hot events in a horizontal or vertical arrangement manner. It should be noted that the present application does not limit the implementation of the hot event aggregation list. For example, it can be implemented using a ranking list.

In addition, the present application does not limit a display mode of the above "event identification information of the at least one candidate hot event" on the information aggregation interface. For example, when the information aggregation interface includes an event aggregation area (e.g. an area used for displaying the hot event list in FIG. 2), the event identification information of the at least one candidate hot event is aggregated and displayed in the event aggregation area (e.g., the event identification information of the at least one candidate hot event is aggregated and displayed in the event aggregation area according to ranks corresponding to these candidate hot events). The rank corresponding to the nth candidate hot event is used for describing a position of the nth candidate hot event in the hot event ranking list, so that the "the rank corresponding to the nth candidate hot event" can indicate the level of attention to the nth candidate hot event. Where n is a positive integer, n ≤ N.

Further, the present application does not limit an arrangement mode of the "event identification information of the at least one candidate hot event" on the above information aggregation interface. For example, the arrangement mode may specifically be: displaying at least one candidate video identification corresponding to the first hot event on the information aggregation interface according to a first arrangement direction. The first arrangement direction may be preset. For example, this may be implemented using horizontal arrangement in area 202 in FIG. 2.

Based on the relevant content of S1 above, it can be seen that for a client with a video playing function (e.g. a video player deployed on a television), when the client is displaying the information aggregation interface (e.g. the hot event list interface 200 shown in FIG. 2), the event identification information of these candidate hot events may be displayed on the information aggregation interface according to the level of attention to the at least one candidate hot event, so that arrangement orders of these pieces of event identification information can indicate the levels of attention to these candidate hot events. In this way, it is conducive to enhancing the user experience in viewing hot events.

S2: At least one candidate video identification corresponding to the first hot event is displayed on the information aggregation interface. Different candidate video identifications correspond to different pieces of video data; the at least one candidate video identification includes a first video identification and a second video identification; the first video identification is in a selected state; and the second video identification is in an unselected state.

An m-th candidate video identification corresponding to the first hot event is used for identifying an m-th piece of video data (i.e., an m-th piece of associated video data corresponding to the first hot event) associated with the first hot event. Furthermore, the present application does not limit the m-th piece of video data. For example, the m-th piece of video data is used for displaying relevant content of the first hot event. Where m is a positive integer, m ≤ M, and M is a positive integer. M represents a number of images in the above "at least one candidate video identification" (i.e., a number of pieces of video data associated with the first hot event).

In addition, the present application does not limit the above "m-th candidate video identification corresponding to the first hot event". For example, the m-th candidate video identification may include text information and image data. The text information is used for identifying the above m-th piece of video data by using some character strings, and the present application does not limit the text information. For example, the text information may include a video title of the m-h piece of video data. This image data is used for identifying the m-th piece of video data by using an image, and the present application does not limit the image data. For example, the image data may be a pre-configured cover image for the above m-th piece of video data. For another example, the image data may also be a frame of image data extracted from the m-th piece of video data (e.g. a first frame of image data in the m-th piece of video data).

In addition, the present application does not limit an aggregation mode of the above "at least one candidate video identification corresponding to the first hot event". For example, it may be implemented using a list (e.g. the list shown in area 202 in FIG. 2). Namely, in a possible implementation, an identification aggregation list may be displayed on the information aggregation interface above, so that the identification aggregation list can aggregate and display these candidate video identifications in a horizontal or vertical arrangement manner. It should be noted that the present application does not limit an association relationship between the arrangement mode of the identification aggregation list and the arrangement mode of the above "hot event aggregation list". For example, the identification aggregation list can be displayed in the horizontal arrangement manner, but the hot event aggregation list can be displayed in the vertical arrangement manner. In this way, a interface space utilization rate can be effectively increased.

Further, the present application does not limit a display mode of the above "at least one candidate video identification corresponding to the first hot event" on the above information aggregation interface. For example, when the candidate video identification includes the image data and the information aggregation interface includes an image display area (e.g. area 202 in FIG. 2), these candidate video identifications (e.g. a plurality of pieces of image data shown in area 202 in FIG. 2) can be aggregated and displayed in the image display area to enable these candidate video identifications to represent the video data (e.g. video 1 to video 5 shown in FIG. 2) associated with the first hot event. The image display area is used for aggregating and displaying associated images of a plurality of pieces of video data corresponding to hot events in selected states.

Furthermore, the present application does not limit a display mode of the above "at least one candidate video identification corresponding to the first hot event" in the image display area. For example, in a possible implementation, the image display area may be used for displaying the at least one candidate video identification in the horizontal arrangement manner (e.g. the image aggregation display mode shown in area 202 in FIG. 2). In this way, it is conducive to displaying these candidate video identifications on the premise of ensuring a large enough video playing area in the following text, thereby effectively ensuring that the video playing area can provide a sufficient display space for the video data. In addition, the present application does not limit a determining process of arrangement orders of these candidate video identifications. For example, the arrangement orders may be determined based on at least one of degrees of association between the video data corresponding to the candidate video identifications and the first hot event, and levels of attention to the video data corresponding to the candidate video identifications.

In fact, for the above "at least one candidate video identification corresponding to the first hot event", the at least one candidate video identification may include the first video identification (e.g. "cover image of video 2" shown in FIG. 2) and the second video identification (e.g. another cover image shown in FIG. 2 except "cover image of video 2"). The first video identification is in the selected state (e.g. the state of "cover image of video 2" shown in FIG. 2), and the second video identification is in the unselected state (e.g. the state of "cover image of video 1" shown in FIG. 2). For ease of understanding, the following will introduce the relevant content of the two video identifications.

For the above first video identification, the first video identification may represent a video identification that is currently in the selected state. Moreover, the present application does not limit a determining process of the first video identification. For example, the first video identification may be determined based on a preset default image selection configuration (e.g. a configuration of automatically selecting a video identification corresponding to video data with the largest degree of association with the hot event). For another example, the first video identification may be determined based on a preset image switching rule (e.g. a rule of automatically switching to video data corresponding to a next piece of image data for playing after playing of video data corresponding to a previous piece of image data is completed). For another example, the first video identification may also be determined based on an image selection operation triggered by the user for these candidate video identifications.

It should be noted that the present application does not limit an indication mode of the selected state of the above video identification. For example, it may be implemented in any related or future manner of highlighting the selected video identification. For another example, it may be implemented in a highlighting manner shown in FIG. 2 for "cover image of video 2".

For the above second video identification, the second video identification may represent a video identification that is currently in an unselected state. Moreover, the present application does not limit the second video identification. For example, the second video identification may be all other video identifications in the above "at least one candidate video identification corresponding to the first hot event", except the first video identification. In addition, the present application does not limit a number of the second video identification. For example, the number of the second video identification is equal to a number of events in the above "at least one candidate video identification corresponding to the first hot event" minus one.

It should be noted that the present application does not limit an indication mode of the unselected state of the above video identification. For example, it may be implemented in any related or future manner of indicating an unselected video identification. For another example, it may be implemented in a non-highlighting manner shown in FIG. 2 for "cover image of video 1".

Based on the relevant content of S2 above, it can be seen that for a client with a video playing function, when the client is displaying the information aggregation interface (e.g. the hot event list interface 200 shown in FIG. 2), both the event identification information of the at least one candidate hot event and the video identifications (e.g. all the images shown in area 202 in FIG. 2) corresponding to the candidate hot events in the selected state (e.g. the above first hot event) are displayed on the information aggregation interface, so that the user can learn some information (e.g. how many pieces of associated video data exist and what the associated video data is) about the video data associated with the first hot event from these video identifications (e.g. how many associated video data exist, what each associated video data is, etc.). In this way, this is conducive to meeting a need of the user for viewing different associated video data of a hot event, thereby enhancing the user experience.

S3: Video data corresponding to the first video identification is played on the information aggregation interface.

The above "video data corresponding to the first video identification" is video data identified by the first video identification. For example, when the first video identification is the "cover image of video 2" shown in FIG. 2, the "video data corresponding to the first video identification" is video 2.

In addition, the present application does not limit a display mode of the above "video data corresponding to the first video identification" on the above information aggregation interface. For example, when the information aggregation interface includes a video playing area (e.g. area 201 shown in FIG. 2), the video data corresponding to the first video identification is played in the video playing area. The video playing area is used for displaying the video data corresponding to the image data in the selected state.

In addition, the present application does not limit an implementation of the above video playing area. For example, when the above information aggregation interface includes an image display area (e.g. area 202 in FIG. 2) and the video playing area (e.g. area 201 shown in FIG. 2), the video playing area is adjacent to the image display area, so that according to the image data in the selected state in the image display area, the user can know more clearly that the video playing area is playing which associated video corresponding to which hot event.

Furthermore, the present application does not limit a relative position between the above video playing area and the above image display area. For example, in a possible implementation, the video playing area may be located above the image display area (e.g., area 201 shown in FIG. 2 is located directly above area 202). For another example, in another possible implementation, the video playing area is located below (e.g. directly below) the image display area.

Based on the relevant content of S3 above, it can be seen that for a client with a video playing function, when the client is displaying the information aggregation interface (e.g. the hot event list interface 200 shown in FIG. 2), the event identification information of the at least one candidate hot event and the video identifications corresponding to the candidate hot events in the selected state are displayed on the information aggregation interface, and the video data represented by the video identifications (e.g. the above "first video identification") in the selected state can be displayed on the information aggregation interface too. In this way, it is convenient for the user to directly watch one or more video data corresponding to the hot event on the information aggregation interface.

Based on the relevant content of S1 to S3 mentioned above, for the video playing method provided by this embodiment of the present application, when an information aggregation interface (e.g. an interface for displaying a hot event list) is being displayed on an electronic device, event identification information of at least one candidate hot event is displayed on the information aggregation interface to enable the event identification information to indicate these candidate hot events, so that when the event identification information of a first hot event of the candidate hot events is in a selected state, at least one candidate video identification corresponding to the first hot event is further displayed on the information aggregation interface, and the candidate video identifications can indicate which video data is associated with the first hot event; and when a first video identification of the candidate video identifications is in a selected state, video data corresponding to the first video identification is played on the information aggregation interface, so that the video data can reflect relevant content of the first hot event. Therefore, the purpose of displaying, to a user, video data corresponding to a hot event can be achieved.

Since the at least one candidate video identification corresponding to the first hot event is aggregated and displayed on the above information aggregation interface, the user can know some information about the video data associated with the first hot event (e.g. how many pieces of associated video data exist and what the associated video data is) according to these candidate video identifications, and a purpose of switching playing of different video data associated with the first hot event can also be achieved according to a selection operation for these candidate video identifications. In this way, a need of the user for viewing different associated video data of a hot event can be met, so that the efficiency of obtaining video data of a hot event by the user can be effectively improved, and the adverse impact caused by the defect of single interaction of the above information display solution can be effectively avoided. In this way, it is conductive to enhancing the user experience.

In addition, this embodiment of the present application does not limit an executive body of the above video playing method. For example, the video playing method provided by this embodiment of the present application can be performed by an electronic device. The electronic device includes but is not limited to a television, a smartphone, a tablet, a laptop, a personal digital assistant (PDA), and the like.

In fact, to better enhance the user experience, the user can achieve, according to an image selection and switching operation triggered for the image display area (e.g. area 202 shown in FIG. 2), a purpose of switching the video data played in the above video playing area. In this way, it is beneficial for achieving the purpose that the user watches different video data of a hot event in the video playing area, thereby enhancing the user experience.

Based on the content of the above paragraph, it can be seen that to better enhance the user experience, the present application further provides a possible implementation of the above video playing method. In this implementation, the video playing method may further include step 11 to step 13 below in addition to above S1 to S3.

Step 11: A selection operation for the second video identification in the above at least one candidate video identification.

It should be noted that the present application does not limit the implementation of the selection operation triggered for the second video identification. For example, the selection operation can be implemented using any relevant or future selection implementation method. For another example, when the video playing method provided by the present application is applied to a television, the selection operation can specifically be: The user uses a remote controller of the television to control a focus to move onto the second video identification. It should be noted that the present application does not limit an implementation of the remote controller. For example, the remote controller can control the focus to move by using an up key ↑, a down key ↓, a left key _{←}, and a right key →.

Step 12: The above first video identification is switched from the selected state to an unselected state, and the above second video identification is switched from the unselected state to a selected state.

In the present application, for a client with a video playing function, when the client is displaying the information aggregation interface (e.g. the hot event list interface 200 shown in FIG. 2) and the first video identification ("cover image of video 2" shown in FIG. 2) in the image display area of the information aggregation interface is in the selected state, after the selection operation for the second video identification (e.g. "cover image of video 3" shown in FIG. 2) in the image display area is received, it can determine that the user desires to perform switching from the first video identification to the second video identification. Therefore, in the image display area, the first video identification can be switched from the selected state to the unselected state, and the second video identification can be switched from the unselected state to the selected state (e.g. switching from area 202 in FIG. 2 to area 202 in FIG. 3). In this way, a purpose of switching from one piece of image data to another piece of image data can be achieved.

Step 13: The video data played on the above information aggregation interface is switched to video data corresponding to the second video identification.

In the present application, for a client with a video playing function, when the client is displaying the information aggregation interface (e.g. the hot event list interface 200 shown in FIG. 2) and the first video identification ("cover image of video 2" shown in FIG. 2) in the image display area of the information aggregation interface is in the selected state, after the selection operation for the second video identification (e.g. cover image of video 3 shown in FIG. 2) in the image display area is received, it can determine that the user desires to watch the video data corresponding to the second video identification. Therefore, the video data being played can be switched to the video data (e.g. video 3 played in area 201 in FIG. 3) corresponding to the second video identification in the video playing area of the information aggregation interface, so as to continue to play the video data corresponding to the second video identification in the video playing area, so that the user can achieve, according to the selection and switching operation for the video data played on the information aggregation interface, the switching process of the video data played on the information aggregation interface. In this way, it can meet a need of the user for viewing different associated video data of a hot event, thereby enhancing the user experience.

Based on the relevant content of step 11 to step 13 above, it can be seen that for a client with a video playing function, when the client is displaying the information aggregation interface (e.g. the hot event list interface 200 shown in FIG. 2) and the image data corresponding to a plurality of pieces of video data are displayed in the image display area of the information aggregation interface, the user can achieve, according to the selection and switching operation for the image data, a purpose of replacing the video data played in the video playing area of the information aggregation interface. In this way, it can meet a need of the user for viewing different associated video data of a hot event, thereby enhancing the user experience.

In fact, to better enhance the user experience of watching the video data, the user may enter an internal stream to watch the video data according to some operations triggered for the above information aggregation interface (e.g. clicking on the title of a hot event, clicking on a piece of image data in the image display area, or clicking on the video data played in the video playing area). In this way, a purpose of switching from an external list to an internal video can be achieved.

Based on the content of the above paragraph, it can be seen that to meet the needs shown in the previous content, the present application further provides three possible implementations for the above video playing method. For ease of understanding, the following will explain the three implementations in combination with three cases.

Case 1: In some application scenarios, the user may enter the internal stream by triggering an operation for a piece of image data displayed in the image display area of the above information aggregation interface.

Based on the relevant content of Case 1 above, it can be seen that in a possible implementation, the video playing method provided in the present application may include at least step 21 below.

Step 21: When the above first video identification is displayed on the above information aggregation interface, a video display interface is displayed in response to a triggering operation for the first video identification. Video data corresponding to the first video identification is displayed on the video display interface; and the video display interface is used for displaying the at least one candidate video identification according to a second arrangement direction.

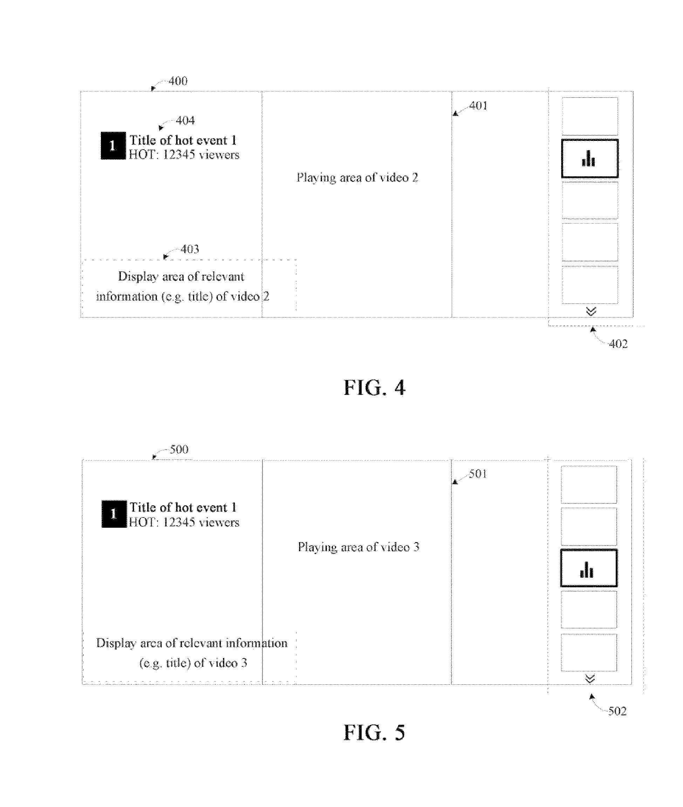

The video display interface is used for displaying the above "video data corresponding to the first video identification" and its relevant content (e.g. the hot event associated with the video data and the title of the video data). For example, the video display interface can be interface 400 shown in FIG. 4.

In addition, the present application does not limit an implementation of the above "triggering operation for the first video identification" in step 21. For example, the operation can be performed using any relevant or future operation (e.g. click operation) that can be triggered for image data. For another example, when the video playing method provided by the present application is applied to a television, the "triggering operation for the first video identification" can specifically be: When the first video identification is in the selected state (e.g., the focus controlled by the remote controller of the television is located on the first video identification), a press operation for a confirm key (e.g., an OK key) in the remote controller is received. The OK key is a key deployed in the remote controller to express confirmation.

In addition, the present application does not limit an implementation of the "second arrangement direction" in step 21 above. For example, the second arrangement direction may be implemented using vertical arrangement shown in area 402 of FIG. 4 to enhance an interface space utilization effect for the above video display interface. It should be noted that the present application does not limit an association relationship between the second arrangement direction and the above "first arrangement direction". For example, the association relationship may be that the second arrangement direction is different from the first arrangement direction.

Based on the relevant content of step 21, it can be seen that for a client with a video playing function, when the client is displaying the information aggregation interface (e.g. the hot event list interface 200 shown in FIG. 2), the user may open the video display interface (e.g. interface 400 shown in FIG. 4) by triggering an operation (e.g. pressing the OK key of the remote controller) for any piece of image data (e.g. "cover image of video 2" shown in FIG. 2) displayed in the image display area of the information aggregation interface, so that the video display interface can be used for displaying the video data corresponding to the image data. In this way, a purpose of switching from the external list to the internal video can be achieved, which is conducive to enhancing the user experience of watching videos.

Case 2, in some application scenarios, the user may also enter the internal stream by triggering an operation for the title of a hot event displayed on the above information aggregation interface.

Based on the relevant content of Case 2 above, it can be seen that in a possible implementation, the video playing method provided in the present application may include at least step 22 below.

Step 22: When the event identification information of the above first hot event is displayed on the information aggregation interface, a video display interface is displayed in response to a triggering operation for the event identification information of the first hot event.

It should be noted that the present application does not limit an implementation of the above "triggering operation for the event identification information of the first hot event" in step 22. For example, the operation can be performed using any relevant or future operation (e.g. click operation) that can be triggered for a character string. For another example, when the video playing method provided by the present application is applied to a television, the "triggering operation for the event identification information for the first hot event" may specifically be: When the event identification information for the first hot event is in the selected state (e.g., the focus controlled by the remote controller of the television is located on the event identification information for the first hot event), a press operation for a confirm key (e.g., an OK key) in the remote controller is received.

It should also be noted that for the relevant content of the "video display interface" in step 22, refer to step 21 above.

Based on the relevant content of step 22 above, it can be seen that for a client with a video playing function, when the client is displaying the information aggregation interface (e.g. the hot event list interface 200 shown in FIG. 2), the user may open the video display interface (e.g. interface 400 shown in FIG. 4) by triggering an operation (e.g. pressing the OK key of the remote controller) for the event identification information (e.g. "title of hot event 1" shown in FIG. 2) of any hot event displayed on the information aggregation interface, so that the video display interface can be used for displaying the video data corresponding to the hot event. In this way, a purpose of switching from the external list to the internal video can be achieved, which is conducive to enhancing the user experience of watching videos.

It should be noted that the present application does not limit an implementation of the "video data corresponding to the hot event" mentioned in the above paragraph. For example, if a piece of video data related the hot event is being played in the video playing area of the information aggregation interface before executing step 22, the currently being played video data may be determined to be the "video data corresponding to the hot event". If video data related to other hot events is being played in the video playing area of the information aggregation interface before executing step 22, a 1st piece of video data (e.g. the video data with the largest degree of association with the hot event) corresponding to the hot event can be determined to be the "video data corresponding to the hot event".

Case 3: In some application scenarios, the user may also enter the internal stream by triggering an operation for video data displayed in the video playing area of the above information aggregation interface.

Based on the relevant content of Case 3 above, it can be seen that in a possible implementation, the video playing method provided in the present application may include at least step 23 below.

Step 23: When the video data corresponding to the above first video identification is being played on the information aggregation interface, a video display interface is displayed in response to a triggering operation for the video data corresponding to the first video identification.

It should be noted that the present application does not limit an implementation of the above "triggering operation for the video data corresponding to the first video identification" in step 23. For example, the operation may be performed using any relevant or future operation (e.g. click operation) that can be triggered for a piece of image data. For another example, when the video playing method provided by the present application is applied to a television, the "triggering operation for the video data corresponding to the first video identification" may specifically be: When the video data corresponding to the first video identification is in the selected state (e.g., the focus controlled by the remote controller of the television is located on the video data corresponding to the first video identification), a press operation for a confirm key (e.g., an OK key) in the remote controller is received.

It should also be noted that for the relevant content of the "video display interface" in step 23, refer to step 21 above.

Based on the relevant content of step 23, it can be seen that for a client with a video playing function, when the client is displaying the information aggregation interface (e.g. the hot event list interface 200 shown in FIG. 2), the user can open the video display interface (e.g. interface 400 shown in FIG. 4) by triggering an operation (e.g. pressing the OK key of the remote controller) for video data (e.g. "video 2" shown in FIG. 2) being played in the video playing area of the information aggregation interface, so that the video display interface can be used for displaying the video data. In this way, a purpose of switching from the external list to the internal video can be achieved, which is conducive to enhancing the user experience of watching videos.

Based on the relevant content of step 21 to step 23 above, it can be seen that for a client with a video playing function, when the client is displaying the information aggregation interface (e.g. the hot list interface 200 shown in FIG. 2), the user may use various different operation modes (e.g. clicking on the title of a hot event, clicking on a piece of image data in the image display area, or clicking on the video data played in the video playing area, etc.) to achieve a purpose of switching from the external list to the internal video. In this way, a need of the user for watching videos can be better met, and thus, it is conductive to enhancing the user experience of watching videos.

In fact, for the above video display interface (e.g. interface 400 shown in FIG. 4), to better enhance the user experience, the video display interface can be used for displaying the above "video data corresponding to the first video identification" (e.g. video 2 shown in area 401 in FIG. 4), and can be further used for displaying the above "at least one candidate video identification corresponding to the first hot event" (e.g. all images shown in area 402 of FIG. 4), so that on the video display interface, the user can directly achieve, according to a selection and switching operation for these candidate video identifications, the switching operation for the video data played on the video display interface. For ease of understanding, the following makes an explanation in conjunction with examples.

As an example, in a possible implementation, the video playing method provided by the present application may at least include step 31 to step 33 below.

Step 31: The at least one candidate video identification corresponding to the first hot event is displayed on the information aggregation interface.

In the present application, for a client with a video playing function, when the client is displaying the information aggregation interface (e.g. the hot list interface 200 shown in FIG. 2), the information aggregation interface is switched to the video display interface (e.g. interface 400 shown in FIG. 4) after receiving an internal stream entering operation triggered by the user for the information aggregation interface (e.g. clicking on the title of a hot event, clicking on a piece of image data in the image display area, or clicking on the video data played in the video playing area), so that the video display interface can display video data (e.g. video 2 shown in FIG. 4) corresponding to a hot event and some video identifications (e.g. image data shown in area 402 in FIG. 4) corresponding to the hot event, in order for the user to subsequently know, according to these video identifications, which video data of the hot event is being played on the video display interface, so that the user can subsequently achieve, according to the selection and switching operation for these video identifications, a purpose of switching of the video data being played on the video display interface. In this way, it is beneficial for overcoming the sense of confusion of the user during video switching at the internal stream, thus enhancing the user experience.

It should be noted that the present application does not limit a display mode of the above "at least one candidate video identification" on the above video display interface. For example, when the above video display interface includes an image aggregation area (e.g. area 402 shown in FIG. 4), the "at least one candidate video identification" can be aggregated and displayed in the image aggregation area. In addition, the present application does not limit an aggregation and display mode of the "at least one candidate video identification". For example, the at least one candidate video identification can be displayed in a vertical-row and single-column manner (e.g. an image display mode shown in area 402 in FIG. 4). The image aggregation area is used for aggregating and displaying representation images of all video data corresponding to a hot event.

It should be further noted that the present application does not limit an image arrangement order used when the above "at least one candidate video identification" is displayed in the above image aggregation area. For example, the image arrangement order can be consistent with the image arrangement order used in the image display area on the above information aggregation interface.

Step 32: A selection operation for the second video identification in the at least one candidate video identification displayed on the above video display interface.

It should be noted that the present application does not limit the implementation of the selection operation triggered for the second video identification. For example, the selection operation may be implemented using any relevant or future selection implementation method. For another example, when the video playing method provided by the present application is applied to a television, the selection operation is specifically: The user uses a remote controller of the television to control a focus to move onto the second video identification. For still another example, when the video playing method provided by the present application is applied to a television, the selection operation may specifically include the following two actions: The user first uses a remote controller to control a focus to move onto the second video identification, and then presses an OK key on the remote controller.

Step 33: The above "video data" that is played on the above video display interface and corresponds to the first video identification is switched to video data corresponding to the second video identification.

In the present application, for a client with a video playing function, when the client is displaying the information aggregation interface (e.g. the hot event list interface 400 shown in FIG. 4) and the first video identification (e.g. "cover image of video 2" shown in FIG. 4) in the image aggregation area of the video display interface is in the selected state, after the selection operation for the second video identification (e.g. cover image of video 3 shown in FIG. 4) in the image aggregation area is received, it can determine that the user desires to watch the video data corresponding to the second video identification. Therefore, the video data being played can be switched to the video data (e.g. video 3 played in area 501 in FIG. 5) corresponding to the second video identification on the video display interface. In this way, a switching process of the video data displayed on the video display interface can be achieved according to the selection and switching operation for the image data displayed on the video display interface (e.g. switching from video 2 played on interface 400 in FIG. 4 to video 3 played on interface 500 in FIG. 5). In this way, a need of the user for viewing different associated video data of a hot event can be met, and it is conductive to improving the user experience.

In fact, in some possible implementations, to better enhance the user experience, the image data in the selected state may be highlighted in the image aggregation area of the above video display interface, so that after determining that the selected image data has changed, the newly selected image data may be adjusted from the unselected state to the selected state, and the previously selected image data may be adjusted from the selected state to the unselected state (e.g. updating from area 402 in FIG. 4 to area 502 in FIG. 5). In this way, the user experience can be better enhanced.

Based on the relevant content of step 31 to step 33 above, it can be seen that for a client with a video playing function, when the client is displaying the video display interface (e.g. interface 400 shown in FIG. 4) and image data corresponding to a plurality of pieces of video data is displayed in the image aggregation area of the video display interface, the user can achieve, according to the selection and switching operation for the image data, a purpose of switching the video data played on the video display interface (e.g. switching from video 2 shown in area 401 in FIG. 4 to video 3 shown in area 501 in FIG. 5). In this way, a need of the user for viewing different associated video data of a hot event can be met, and it is conductive to improving the user experience.

In fact, to better enhance the user experience of watching videos, some relevant information of a played video can be added onto the above video display interface (e.g. a video title, a nickname of a poster who posting the video, a level of attention to the video). The video title is title content set in advance for the played video. The nickname is used for identifying the poster of the played video. The level of attention is used for indicating a popularity of the video. The present application does not limit an implementation of the level of attention. For example, the level of attention may include likes, reposts, favorites, and the like.

Based on the content of the above paragraph, it can be seen that to better meet the need shown in the previous paragraph, the present application further provides a possible implementation of the above video display interface. In this implementation, the above "video data corresponding to the first video identification" is displayed on the video display interface, and video associated information of the video data corresponding to the first video identification can also be at least displayed, so that the user can learn some information related to the video data from the video associated information. The video associated information is used for describing the relevant content of the video data (e.g. the video title, the nickname of the poster, the level of attention to the video). Moreover, the present application does not limit the video associated information of the video. For example, the video associated information can be some information involved in area 403 in FIG. 4.

In addition, the present application does not limit a display mode of the above video associated information. For example, when the above video display interface includes a video information aggregation area (e.g. area 403 shown in FIG. 4), the video associated information is displayed in the video information aggregation area. The video information aggregation area is used for displaying the relevant content of the video data being played on the video display interface. Furthermore, the present application does not limit a position of the video information aggregation area on the video display interface, for example, at a lower left corner.

Based on the content of the above three paragraphs, it can be seen that for a client with a video playing function, when the client is displaying the video display interface (e.g. interface 400 shown in FIG. 4), the video display interface can display both video data corresponding to a hot event and the relevant content of the video data (e.g. the video title, the nickname of the poster, the level of attention to the video), so that the user can better understand the video data in conjunction with the relevant content. In this way, it is conducive to enhancing the user experience of watching videos.

In fact, to better avoid confusion of the user, relevant information of a hot event (e.g. a rank, an event title, and a popularity of the event) can be added on the above video display interface. The popularity is used for indicating how many users are paying attention to this event.

Based on the content in the above paragraph, it can be seen that to better meet the need shown in the above paragraph, the present application further provides a possible implementation of the above video display interface. In this implementation, the video display interface may display the "video data corresponding to the first video identification" and at least display the "event associated information of the first hot event", so that the user can know from the "event associated information of the first hot event" which hot event the video data being played on the video display interface is related to and what attributes the hot event has (e.g. the rank, the event title, and the popularity of the event). The event associated information is used for representing relevant attributes of a hot event. Moreover, the present application does not limit the event associated information. For example, the event associated information may include attribute information involved in area 404 in FIG. 4.

In addition, the present application does not limit a display mode of the above event associated information. For example, when the event display interface includes an event information aggregation area (e.g. area 404 shown in FIG. 4), the event associated information is displayed in the event information aggregation area. The event information aggregation area is used for display the relevant content of the hot event corresponding to the video data being played on the above event display interface, and the present application does not limit a position of the event information aggregation area on the event display interface, for example, at an upper left corner.

Based on the above three paragraphs, it can be seen that for a client with a video playing function, when the client is displaying the video display interface (e.g. interface 400 shown in FIG. 4), video data corresponding to a hot event and the event associated information of the hot event (e.g. the rank, the event title, the popularity of the event) can be displayed on the video display interface, so that according to the event associated information, the user accurately know which hot event the video data being played on the video display interface is related to, thereby effectively avoiding confusion of the user and enhancing the user experience.

Based on the relevant content of the above video display interface, it can be seen that in a possible implementation, both the above "video data corresponding to the first video identification" and at least one of the above "candidate video identification corresponding to the first hot event", the above "event associated information of the first hot event", and the video associated information of the video data corresponding to the first video identification can be displayed on the video display interface. In this way, it is beneficial for enriching information provided by the video display interface, thereby effectively avoiding the confusion of the user when the user watches videos or switches the videos on the video display interface, and thus better enhancing the user experience of watching videos.

In fact, for the above video display interface (e.g. interface 400 shown in FIG. 4), the user may awake a video playing control interface according to an operation (pressing the left key ←, the right key →, or the OK key on the remote controller) triggered for the video display interface, so that the user can perform, on the video playing control interface, some playing control operations (e.g. adjusting a video playing progress) on the video data being played subsequently.

Based on the content of the above paragraph, it can be seen that to better enhance the user experience of watching videos, the present application further provides a possible implementation of the video playing method. In this implementation, the video playing method may further at least include step 41 below. Execution time of step 41 is later than execution time of above step 21, step 22, or step 23.

Step 41: When the above video display interface is in a display state and the video data corresponding to the above first video identification is being displayed on the video display interface, in response to a preset operation triggered for the video display interface, a video playing control interface is displayed. The video playing control interface is used for implementing playing control processing for the video data corresponding to the first video identification.

The preset operation is used for triggering a display process of the video playing control interface corresponding to a piece of video data. Moreover, the present application does not limit an implementation of the preset operation. For example, the preset operation may be implemented using any relevant or future operation that can trigger the display process for the video playing control interface. For another example, when the video playing method provided by the present application is applied to a television and the above video display interface is being displayed on the television, the preset operation may specifically be: A press operation for the OK key, the left key ←, or the right key → on the remote controller of the television is received.

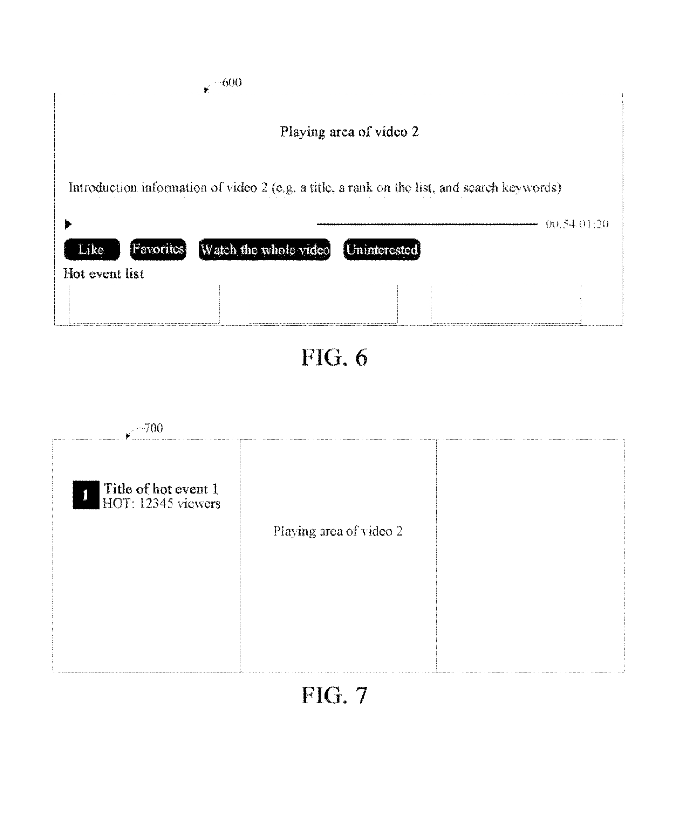

The above "video playing control interface" is used for implementing the playing control processing (e.g. adjusting the video playing progress) for the video data corresponding to the first video identification. Moreover, the present application does not limit the video playing control interface. For example, the video playing control interface may specifically be interface 600 shown in FIG. 6.

Based on the relevant content of step 41 above, it can be seen that for a client with a video playing function, when the client is displaying the video display interface (e.g. interface 400 shown in FIG. 4) and the video data (video 2 shown in FIG. 4) corresponding to the above first video identification is being displayed on the video display interface, after the preset operation triggered for the video display interface is received, switching is performed from the video display interface to the video playing control interface corresponding to the video data, so that the user can achieve playing control processing for the video data according to the video playing control interface. In this way, it is conducive to enhancing the user experience of watching videos.

In fact, to better enhance the user experience of watching hot events, the present application further provides a possible implementation of the above video playing control interface. In this implementation, video data and its related playing control components (e.g. all components shown in FIG. 6), as well as information cards (e.g. event cards shown in FIG. 6) corresponding to some front-ranked hot events in the hot event list can be displayed on the video playing control interface, so that the user can quickly switch and play the video data corresponding to a hot event by using these information cards. The information card is used for aggregating and displaying relevant content of a hot event (e.g. the event title, and the video identification, the popularity of the event, a number of videos, and a rank corresponding to the event).

Based on the content of the above paragraph, it can be seen that to better enhance the user experience, the present application further provides a possible implementation of the video playing method. In this implementation, the video playing method may further include step 42 to step 43 below.

Step 42: At least one information aggregation card corresponding to some or all of the at least one candidate hot event is displayed on the video playing control interface.

The above "at least one information aggregation card" means an information aggregation card configured on the video playing control interface for the above "some or all of the at least one candidate hot event", and the present application does not limit the "at least one information aggregation card". For example, the at least one information aggregation card may include one or more information aggregation cards corresponding to the candidate hot events.

The information aggregation card corresponding to an n-th candidate hot event is used for aggregating and displaying the relevant content of the nth hot event (e.g. the event title, and the video identification, the popularity, a number of videos, and a rank corresponding to the event). Moreover, the present application does not limit an implementation of the information aggregation card. Where n is a positive integer, n ≤ N. For example, if the nth candidate hot event is hot event 2, the information aggregation card corresponding to the nth candidate hot event can be "event card of hot event 2" shown in FIG. 6.

It should be noted that the present application does not limit an implementation of the candidate hot events involved in the above video playing control interface. For example, the implementation may specifically be: Information aggregation cards corresponding to Q top-ranked events of the at least one candidate hot event are displayed on the above video playing control interface. Where Q is a positive integer, and the present application does not limit Q. For example, Q=3 as shown in FIG. 6. For another example, the implementation can also be: All the candidate hot events are displayed on the above video playing control interface, so that the candidate hot events displayed on the video playing control interface are consistent with the candidate hot events displayed on the above information aggregation interface.

It should also be noted that the present application does not limit an association relationship between execution time of step 42 above and execution time of step 41 above. For example, the two execution times may be the same. For another example, the execution time of step 42 is later than the execution time of step 41 above by a preset duration. The preset duration may be set in advance.

Step 43: In response to a triggering operation for a target aggregation card of the above at least one information aggregation card, to-be-played video data corresponding to the target aggregation card is displayed on the video playing control interface.

The target aggregation card is any information aggregation card selected by the user and displayed on the above video playing control interface. For example, when the information aggregation cards corresponding to all of the above "at least one candidate hot event" is displayed on the video playing control interface, the target aggregation card may be an information aggregation card corresponding to a target hot event of the candidate hot events.

The target hot event is a hot event displayed on the above video playing control interface and selected by the user as an information card. For example, the target hot event may be hot event 2 shown in FIG. 6.

In addition, the present application does not limit a triggering operation for the information aggregation card corresponding to the target hot event. For example, the triggering operation may be similar to the above "triggering operation for the event identification information of the first hot event". For the sake of brevity, it will not be elaborated here.

The above "to-be-played video data" is preset video data associated with the target hot event and needing to be played when the information aggregation card corresponding to the above target hot event is triggered. Moreover, the present application does not limit the to-be-played video data. For example, to-be-played video data can be any piece of video data of at least one piece of associated video data corresponding to the target hot event.

Based on the relevant content of step 42 to step 43 above, it can be seen that for a client with a video playing function, when the client is displaying the video playing control interface (e.g. interface 600 shown in FIG. 6) and the information aggregation cards corresponding to some hot events are displayed on the video playing control interface, the user can quickly open, on the video playing control interface, the video data corresponding to other hot events according to a selection operation for the information aggregation cards. In this way, it is conducive to enhancing the user experience of watching hot events.

In fact, for the above video display interface (e.g. interface 400 shown in FIG. 4), when a plurality of pieces of other content, except the video data, are further displayed on the video display interface, the content may block the video data (for example, the content shown in area 403 in FIG. 4 may block the video data shown in area 401), and may also distract the attention of the user. Therefore, to better enhance the user experience of watching videos, screen clear processing can be performed on the video display interface.

Based on the content of the above paragraph, it can be seen that to better enhance the user experience of watching videos, the present application further provides a possible implementation of the video playing method. In this implementation, the video playing method may further at least include step 51 below. Execution time of step 51 is later than execution time of above step 21, step 22, or step 23.

Step 51: In response to a preset screen clear condition being satisfied, screen clear processing is performed on the above video display interface to cause that the above at least one candidate video identification does not exist on the video display interface after the screen clear processing.

The preset screen clear condition is a preset condition that needs to be satisfied during the performing of the screen clear processing on the video display interface. Furthermore, the preset screen clear condition may be set in advance. For ease of understanding, the following makes an explanation in conjunction with two examples.

Example 1: The preset screen clear condition may specifically include: The video display interface does not receive any triggering operation within a preset duration. The preset duration may be set in advance (e.g. five seconds). It can be seen that in a possible implementation, if the user does not trigger any operation for the video display interface for a long time (e.g. five seconds), it may determine that the user is watching the video data played on the video display interface, and therefore it can determine that the preset screen clear condition has been satisfied.

Example 2: The preset screen clear condition may specifically include: A preset screen clear operation triggered for the video display interface is received. The preset screen clear operation is used for triggering a screen clear process of the video display interface, and the present application does not limit the preset screen clear operation. For example, when the video playing method provided by the present application is applied to a television and the video display interface is being displayed on the television, the preset screen clear operation may vbe specifically be: A press operation for the confirm key in the remote controller of the television is received.

In addition, the present application does not limit an implementation of "screen clear processing" in step 51 above. For example, the screen clear processing may be specifically: deleting all other content from the video display interface (e.g. interface 400 in FIG. 4) except the video data being played and the event associated information of the hot event corresponding to the video data, to ensure that only the video data and the event associated information exist on the video display interface (e.g. interface 700 in FIG. 7) after screen clearing. In this way, the interference caused by the deleted content to the user can be effectively avoided, thereby enhancing the user experience of watching videos.

Based on the relevant content of step 51 above, it can be seen that for a client with a video playing function, when the client is displaying the video display interface (e.g. interface 400 shown in FIG. 4) and much content is displayed on the video display interface, when it is determined that the preset screen clear condition is satisfied, the screen clear processing may be performed on the video display interface to ensure that the content displayed on the video display interface after screen clearing (e.g. interface 700 in FIG. 7) is less than that on the video display interface before screen clearing. In this way, the interference caused by the deleted contents to the user can be effectively avoided, thereby enhancing the user experience of watching videos.

In addition, to better enhance the user experience, in some application scenarios, after switching to the video display interface in as screen clear mode (i.e., the video display interface after screen clearing), the user can further perform re-switching to the video display interface (e.g. interface 400 shown in FIG. 4) not in a screen non-clear state according to an operation (e.g. pressing a back key or up key ↑ on the remote controller) triggered for the video display interface (e.g., interface 700 in FIG. 7), to achieve a purpose of the user for viewing more information from the video display interface, thus enhancing the user experience.

In addition, to better enhance the user experience, in some other application scenarios, after switching to the video display interface in a screen clear mode, the user can further perform switching to the list display interface (e.g. interface 200 shown in FIG. 2) according to an operation (e.g. pressing a back key on the remote controller) triggered for the video display interface (e.g., interface 700 in FIG. 7), to achieve a purpose of the user for quickly viewing the hot event list, thus enhancing the user experience.

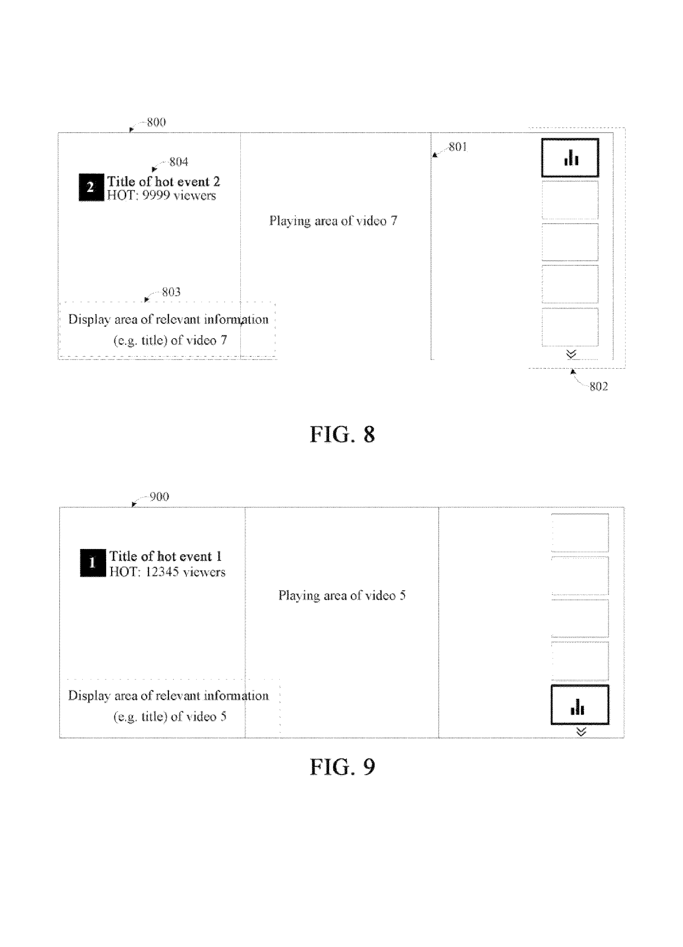

Furthermore, to better enhance the user experience, in still some other application scenarios, after switching to the video display interface in clear screen mode, the user can directly switch and display video data (e.g. video 7 played on interface 800 in FIG. 8) corresponding to a next hot event according to an operation (e.g. pressing the down key ↓ on the remote controller) triggered for the video display interface (e.g. interface 700 in FIG. 7), to meet a need of the user for quickly switching hot events in the internal stream, which is conducive to enhancing the user experience.

Based on the content of the above paragraph, it can be seen that to better enhance the user experience, the present application further provides a possible implementation of the video playing method. In this implementation, the video playing method may further include step 52 below. Execution time of step 52 is later than execution time of above step 51.

Step 52: When the above video display interface (e.g. interface 700 shown in FIG. 7) after screen clearing is being displayed, and the relevant content of the first hot event is displayed on the video display interface, in response to a first event switching operation triggered for the video display interface, displayed content on the video display interface is updated to a to-be-displayed object corresponding to the second hot event. The to-be-displayed object at least includes to-be-displayed video data corresponding to the second hot event. The second hot event is a next hot event or a previous hot event corresponding to the first hot event.

The first event switching operation is an operation triggered for the video display interface after screen clearing, which is used for switching from a current hot event to the next hot event (or the previous hot event).

In addition, the present application does not limit the above first event switching operation. For example, when the video playing method provided by the present application is applied to a television, the above video display interface after screen clearing is being displayed on the television, and the first event switching operation is used for switching from the current hot event to the next hot event. The first event switching operation may specifically be: A press operation for the down key ↓ on the remote controller of the television is received.

The second hot event is a next or previous hot event corresponding to a hot event being displayed on the above video display interface, so that the user can perform quick switching from the hot event being displayed on the video display interface to the second hot event through an operation (e.g. the first event switching operation). Moreover, the present application does not limit the second hot event. For example, when the above first event switching operation is used for switching from the current hot event to the next hot event, the second hot event may be the next hot event corresponding to the "hot event being displayed on the video display interface". For ease of understanding, the following makes an explanation in conjunction with examples.

As an example, when the above video display interface after screen clearing (e.g. interface 700 shown in FIG. 7) is being displayed, and the relevant content of the first hot event (e.g. hot event 1 shown on interface 700 in FIG. 7) is displayed on the video display interface, the next hot event (e.g. hot event 2 shown on interface 800 in FIG. 8) corresponding to the first hot event may be determined to be the second hot event, so that a rank corresponding to the second hot event is adjacent to a rank corresponding to the first hot event, and the rank corresponding to the second hot event is lower than the rank corresponding to the first hot event. The rank corresponding to the second hot event is used for describing a position of the second hot event in the above hot event ranking list (e.g. the hot event list shown on interface 200 in FIG. 2), and the rank corresponding to the first hot event is used for describing a position of the first hot event in the hot event ranking list.

It should be noted that the relevant content of the above "previous hot event corresponding to the first hot event" is similar to the relevant content of the above "next hot event corresponding to the first hot event". For the sake of brevity, the relevant content will not be elaborated here.

The above "to-be-displayed object corresponding to the second hot event" is an information object (e.g. all objects displayed on interface 800 in FIG. 8) that needs to be displayed during the switching to the displaying of the relevant content of the second hot event on the above video display interface.

In addition, the present application does not limit an implementation of the above "to-be-displayed object corresponding to the second hot event". For example, it may at least include the to-be-displayed video data corresponding to the second hot event. Among them, the to-be-displayed video data is video data that needs to be displayed during the switching to displaying of the relevant content of the second hot event on the above video display interface. Moreover, the present application does not limit the to-be-displayed video data. For example, the to-be-displayed video data is determined according to at least one piece of associated video data corresponding to the second hot event (for example, a top-ranked piece of video data in the at least one piece of associated video data corresponding to the second hot event can be determined to be the to-be-displayed video data). The "at least one piece of associated video data corresponding to the second hot event" is used for representing all pieces of video data associated with the second hot event (e.g. video 7 to video 11 involved in area 802 in FIG. 8).

For another example, in some application scenarios, o better enhance the user experience, the above "to-be-displayed object corresponding to the second hot event" can include the to-be-displayed video data (e.g. video 7 shown in area 801 of FIG. 8) corresponding to the second hot event, and may further include at least one of a video identification (e.g. all pieces of image data shown in area 802 of FIG. 8) corresponding to the at least one piece of associated video data associated with the second hot event, event associated information (e.g. information shown in area 804 of FIG. 8) of the second hot event, and video associated information (e.g. information shown in area 803 of FIG. 8) of the to-be-displayed video data. The video identification corresponding to a kth piece of associated video data is used for representing the kth associated video data. Moreover, the "video identification corresponding to the kth associated video data" is similar to the above "m-th candidate video identification". For the sake of brevity, it will not be elaborated here. In addition, the "event associated information of the second hot event" is similar to the above "event associated information of the first hot event", and the "video associated information of the to-be-displayed video data" is similar to the above "video data corresponding to the first video identification". For the sake of brevity, it will not be elaborated here.

Based on the relevant content of step 52 above, it can be seen that for a client with a video playing function, when the client is displaying the video display interface after screen clearing (e.g. interface 700 shown in FIG. 7), and the relevant objects (e.g. all the objects displayed on interface 700 in FIG. 7) of the first hot event are being displayed on the video display interface, after the first event switching operation triggered for the video display interface is received, it can determine that the user does not want to continue watching the video data of the first hot event (e.g. hot event 1 shown in FIG. 7), so the displayed content of the video display interface can be directly updated to the to-be-displayed object (e.g. the relevant content of hot event 2 in FIG. 8) corresponding to the second hot event, and the user can continue to watch the video data of the second hot event on the video display interface. In this way, a purpose of quickly switching of hot events on the video display interface can be achieved, thereby enhancing the user experience.

In fact, to better enhance the user experience, the user can use the video display interface after screen clearing (e.g. interface 700 shown in FIG. 7) for hot event switching processing, and can use the video display interface before screen clearing (e.g. interface 400 shown in FIG. 4) for hot event switching processing. In this way, a hot event switching need of the user can be better met, thereby enhancing the user experience.

Based on the content of the above paragraph, it can be seen that to better enhance the user experience, the present application further provides a possible implementation of the video playing method. In this implementation, the video playing method may further include step 61 below. Execution time of step 61 is later than execution time of above step 21, step 22, or step 23.

Step 61: When the video display interface (e.g. interface 400 shown in FIG. 4) before screen clearing is being displayed, and the relevant content of the first hot event is displayed on the video display interface, in response to a second event switching operation triggered for the video display interface, displayed content on the video display interface is updated to a to-be-displayed object corresponding to the second hot event. The second hot event is a next hot event or a previous hot event corresponding to the first hot event.

The image aggregation area is used for aggregating and displaying the video identifications corresponding to the hot events displayed on the above video display interface. For example, when the relevant content of the first hot event is displayed on the video display interface (e.g. interface 400 shown in FIG. 4), the image aggregation area is used for aggregating and displaying at least one candidate video identification (e.g. image data shown in area 402 in FIG. 4) corresponding to the first hot event. It should be noted that the relevant content of the image aggregation area can be found above.

The second event switching operation is an operation triggered for the video display interface before screen clearing, which is used for switching from a current hot event to the next hot event (or the previous hot event).

In addition, the present application does not limit the above second event switching operation. For example, when the video display interface before screen clearing (e.g. interface 400 shown in FIG. 4) includes the image aggregation area, the second event switching operation can specifically be a preset switching operation triggered for the image aggregation area in the video display interface. The preset switching operation is an operation triggered for the image aggregation area in the video display interface before screen clearing, which is used for switching from a current hot event to the next hot event (or the previous hot event).

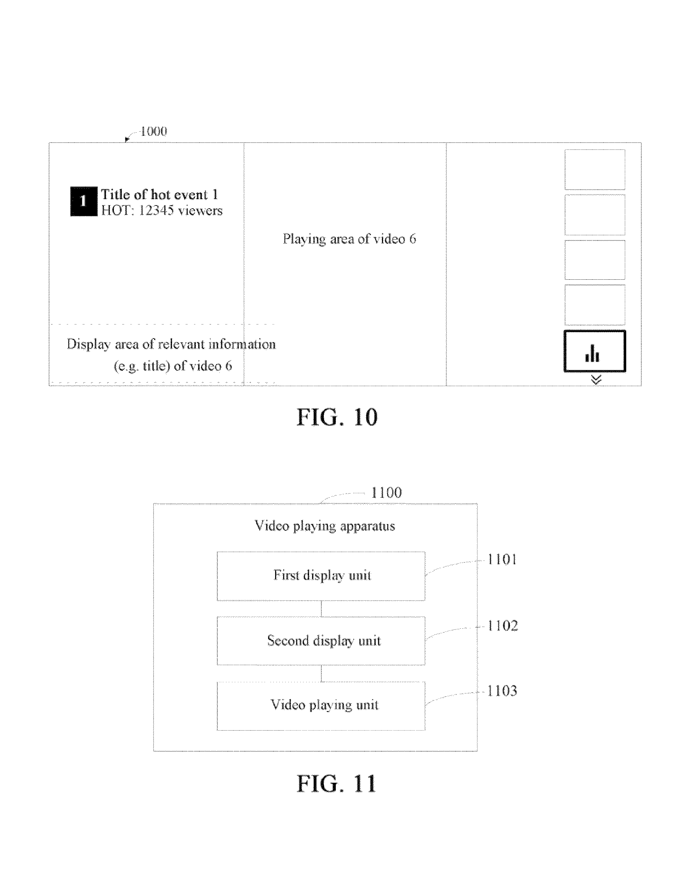

In addition, the present application does not limit the above preset switching operation. For example, when the video playing method provided by the present application is applied to a television, the above video display interface after screen clearing is being displayed on the television, and the preset switching operation is used for switching from the current hot event to the next hot event. The preset switching operation can specifically be: The remote controller of the television is first used to move the focus to the last video identification corresponding to the above first hot event; and a press operation for the down key ↓ on the remote controller is then received. The "last video identification corresponding to the first hot event" is a bottom-ranked image during aggregation and displaying of the at least one candidate video identification corresponding to the first hot event. For example, as shown in FIG. 9, if the first hot event corresponds to five video identifications, the last video identification corresponding to the first hot event is "cover image of video 5" shown on interface 900 in FIG. 9. For another example, as shown in FIG. 10, if the first hot event corresponds to sixth video identifications, the last video identification corresponding to the first hot event is "cover image of video 6" shown on interface 1000 in FIG. 10.

Furthermore, for the relevant content of the "to-be-displayed object corresponding to the second hot event" in step 61, refer to the relevant content of step 52. For the sake of brevity, it will not be elaborated here.

Based on the relevant content of step 61 above, it can be seen that for a client with a video playing function, when the client is displaying the video display interface before screen clearing (e.g. interface 400 shown in FIG. 4), and the relevant objects (e.g. all the objects displayed on interface 400 in FIG. 4) of the first hot event are being displayed on the video display interface, after the second event switching operation triggered for the video display interface is received, it can determine that the user does not want to continue watching the video data of the first hot event (e.g. hot event 1 shown in FIG. 4), so the displayed content of the video display interface can be directly updated to the to-be-displayed object (e.g. the relevant content of hot event 2 in FIG. 8) corresponding to the second hot event, and the user can continue to watch the video data of the second hot event on the video display interface. In this way, a purpose of quickly switching of hot events on the video display interface can be achieved, thereby enhancing the user experience.

Based on the video playing method provided by this embodiment of the present application, the embodiments of the present application further provide a video playing apparatus. The apparatus will be explained and described below in conjunction with FIG. 11. FIG. 11 is a schematic structural diagram of a video playing apparatus provided by an embodiment of the present application. It should be noted that for the technical details of the video playing apparatus provided by this embodiment of the present application, refer to the relevant content of the above video playing method.

As shown in FIG. 11, the video playing apparatus 1100 provided by this embodiment of the present application includes:
a first display unit 1101, configured to display an information aggregation interface, wherein event identification information of at least one candidate hot event is displayed on the information aggregation interface; the at least one candidate hot event includes a first hot event; the event identification information of the first hot event is in a selected state;
a second display unit 1102, configured to display at least one candidate video identification corresponding to the first hot event on the information aggregation interface, wherein different candidate video identifications correspond to different pieces of video data; the at least one candidate video identification includes a first video identification and a second video identification; the first video identification is in a selected state; the second video identification is in an unselected state; and
a video playing unit 1103, configured to play video data corresponding to the first video identification on the information aggregation interface.

In a possible implementation, the video playing apparatus 1100 further includes:
a first receiving unit, configured to receive a selection operation for the second video identification;
a first switching unit, configured to: switch the selected state of the first video identification to an unselected state, and switch the unselected state of the second video identification to a selected state; and
a second switching unit, configured to switch the video data played on the information aggregation interface to video data corresponding to the second video identification.

In a possible implementation, the second display unit 1102 is specifically configured to display the at least one candidate video identification corresponding to the first hot event on the information aggregation interface according to a first arrangement direction.

The video playing apparatus 1100 further includes:
a third display unit, configured to: in response to a triggering operation for the first video identification, display a video display interface;
   or,
a fourth display unit, configured to: in response to a triggering operation for the event identification information of the first hot event, display the video display interface;
   or,
a fifth display unit, configured to: in response to a triggering operation for the video data corresponding to the first video identification, display the video display interface.

Video data corresponding to the first video identification is displayed on the video display interface; and the video display interface is used for displaying the at least one candidate video identification according to a second arrangement direction.

In a possible implementation, the video playing apparatus 1100 further includes:
a second receiving unit, configured to receive a selection operation for the second video identification from the video display interface; and
a third switching unit, configured to switch the video data that is played on the video display interface and corresponds to the first video identification to video data to video data corresponding to the second video identification.

In a possible implementation, event associated information of the first hot event and/or video associated information of the video data corresponding to the first video identification are further displayed on the video display interface.

In a possible implementation, the video playing apparatus 1100 further includes:
a screen clear processing unit, configured to: in response to a preset screen clear condition being satisfied, perform screen clear processing on the video display interface to cause that the at least one candidate video identification does not exist on the video display interface after the screen clear processing.

In a possible implementation, the video playing apparatus 1100 further includes:
a first update unit, configured to: in response to a first event switching operation for the video display interface, update displayed content on the video display interface to to-be-displayed video data corresponding to the second hot event, wherein the second hot event is a next hot event or a previous hot event corresponding to the first hot event.

In a possible implementation, the video playing apparatus 1100 further includes:
a second update unit, configured to: in response to a second event switching operation for triggering the video display interface, update displayed content on the video display interface to a to-be-displayed object corresponding to the second hot event, wherein the second hot event is a next hot event or a previous hot event corresponding to the first hot event.

In a possible implementation, the video playing apparatus 1100 further includes:
a sixth display unit, configured to: in response to a preset operation for triggering the video display interface, display a video playing control interface; and
a seventh display unit, configured to: display, on the video playing control interface, at least one information aggregation card corresponding to some or all of the at least one candidate hot event.

In a possible implementation, the video playing apparatus 1100 further includes:
an eighth display unit, configured to: in response to a triggering operation for a target aggregation card of the at least one information aggregation card, display to-be-played video data corresponding to the target aggregation card on the video playing control interface.

Based on the relevant content of the above video playing apparatus 1100, for the video playing apparatus 1100 provided by this embodiment of the present application, when an information aggregation interface (e.g. a interface for displaying a hot event list) is being displayed on the video playing apparatus 1100, event identification information of at least one candidate hot event is displayed on the information aggregation interface to enable the event identification information to indicate these candidate hot events, so that when the event identification information of a first hot event of the candidate hot events is in a selected state, at least one candidate video identification corresponding to the first hot event is further displayed on the information aggregation interface, and the candidate video identifications can indicate which video data is associated with the first hot event; and when a first video identification of the candidate video identifications is in a selected state, video data corresponding to the first video identification is played on the information aggregation interface, so that the video data can reflect relevant content of the first hot event. Therefore, the purpose of displaying, to a user, video data corresponding to a hot event can be achieved.

Since the at least one candidate video identification corresponding to the first hot event is aggregated and displayed on the above information aggregation interface, the user can know some information about the video data associated with the first hot event (e.g. how many pieces of associated video data exist and what the associated video data is) according to these candidate video identifications, and a purpose of switching playing of different video data associated with the first hot event can also be achieved according to a selection operation for these candidate video identifications. In this way, a need of the user for viewing different associated video data of a hot event can be met, so that the efficiency of obtaining video data of a hot event by the user can be effectively improved, and the adverse impact caused by the defect of single interaction of the above information display solution can be effectively avoided. In this way, it is conductive to enhancing the user experience.

In addition, the embodiments of the present application further provide an electronic device. The device includes a processor and a memory. The memory is configured to store instructions or a computer program. The processor is configured to execute the instructions or the computer program stored in the memory to cause the electronic device to perform any implementation of the video playing method provided by embodiments of the present application.

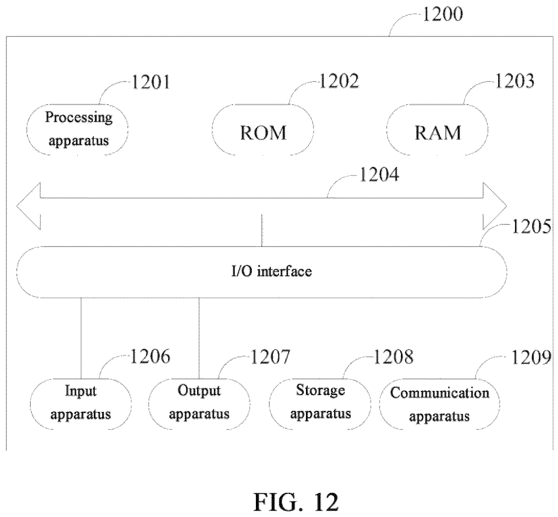

Referring to FIG. 12, it illustrates a schematic structural diagram of an electronic device 1200 suitable for implementing the embodiments of the present application. The terminal device in the embodiments of the present application may include, but is not limited to, a mobile phone, a laptop, a digital broadcast receiver, a Personal Digital Assistant (PDA), a Portable Android Device (PAD), a Portable Media Player (PMP), a mobile terminal such as a vehicle-mounted terminal (for example, a vehicle-mounted navigation terminal), and a fixed terminal such as digital television (TV) and a desktop computer. The electronic device shown in FIG. 12 is only an example and should not impose any limitations on the functionality and scope of use of the embodiments of the present application.

As shown in FIG. 12, the electronic device 1200 may include a processing apparatus (e.g. a central processing unit and graphics processor) 1201 that can perform various appropriate actions and processing according to programs stored in a Read-Only Memory (ROM) 1202 or loaded from a storage apparatus 1208 to a Random Access Memory (RAM) 1203. Various programs and data required for operations of the electronic device 1200 may alternatively be stored in the RAM 1203. The processing apparatus 1201, the ROM 1202, and the RAM 1203 are connected to each other through a bus 1204. An Input/Output (I/O) interface 1205 is also connected to the bus 1204.

Usually, following apparatuses can be connected to the I/ O interface 1205: an input apparatus 1206 including a touch screen, a touchpad, a keyboard, a mouse, a camera, a microphone, an accelerometer, a gyroscope, and the like; an output apparatus 1207 including a Liquid Crystal Display (LCD), a speaker, a vibrator, and the like; a storage apparatus 1208 including a magnetic tape, a hard disk drive, and the like; and a communication apparatus 1209. The communication apparatus 1209 can allow the electronic device 1200 to wirelessly or wiredly communicate with other devices to exchange data. Although FIG. 12 shows the electronic device 1200 with multiple apparatuses, it should be understood that the electronic device 1200 is not required to implement or have all the apparatuses shown, and can alternatively implement or have more or fewer apparatuses.

Particularly, according to the embodiments of the present application, the process described in the reference flowchart above can be implemented as a computer software program. For example, the embodiments of the present application include a computer program product, including a computer program carried on a non-transitory computer-readable medium, and the computer program includes program codes used for performing the methods shown in the flowcharts. In such an embodiment, the computer program may be downloaded and installed from a network through the communication apparatus 1209, or installed from the storage apparatus 1208, or installed from the ROM 1202. When the computer program is executed by the processing apparatus 1201, the above-mentioned functions defined in the methods of the embodiments of the present application are executed.

The electronic device provided in this embodiment of the present application and the method provided in the above embodiment belong to the same concept. Technical details not fully described in this embodiment can be found in the above embodiment, and this embodiment has the same effects as the above embodiment.

The embodiments of the present application further provide a computer-readable medium, having instructions or a computer program stored thereon. When the instructions or the computer program is run on a device, the device is caused to perform any implementation of the video playing method provided by the embodiments of the present application.

It should be noted that the computer-readable medium mentioned in the present application can be a computer-readable signal medium, a computer-readable storage medium, or any combination of the computer-readable signal medium and the computer-readable storage medium. The computer-readable storage medium can be, for example, but not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard disk drive, a RAM, a ROM, an Erasable Programmable Read Only Memory (EPROM) or flash memory, an optical fiber, a Compact Disc Read-Only Memory (CD-ROM), an optical storage device, a magnetic storage device, or any suitable combination of the above. In the present application, the computer-readable storage medium may be any tangible medium that contains or stores a program, and the program can be used by or in combination with an instruction execution system, apparatus, or device. In the present application, the computer-readable signal media may include data signals propagated in a baseband or as part of a carrier wave, which carries computer-readable program codes. The propagated data signals can be in various forms, including but not limited to: electromagnetic signals, optical signals, or any suitable combination of the above. The computer-readable signal medium may also be any computer-readable medium other than a computer-readable storage medium. The computer-readable signal medium can send, propagate, or transmit programs for use by or in combination with an instruction execution system, apparatus, or device. The program codes contained in the computer-readable medium can be transmitted using any suitable medium, including but are not limited to: a wire, an optical cable, a Radio Frequency (RF), and the like, or any suitable combination of the above.

In some implementations, clients and servers can communicate using any currently known or future developed network protocol such as a Hyper Text Transfer Protocol (HTTP), and can intercommunicate and be interconnected with digital data in any form or medium (for example, a communication network). Examples of the communication network include a Local Area Network (LAN), a Wide Area Network (WAN), an internet (e.g. an Internet), a point-to-point network (e.g. an ad hoc point-to-point network, and any currently known or future developed network.

The computer-readable medium may be included in the electronic device or exist alone and is not assembled into the electronic device.

The above computer-readable medium carries one or more programs. When run by the electronic device, the one or more programs cause the electronic device to implement the above method.

Computer program codes for performing the operations of the present application may be written in one or more programming languages or a combination thereof. The above programming languages include but are not limited to an object-oriented programming language such as Java, Smalltalk, and C++, and conventional procedural programming languages such as "C" language or similar programming languages. The program codes may be executed entirely on a user computer, partly on a user computer, as a stand-alone software package, partly on a user computer and partly on a remote computer, or entirely on a remote computer or a server. In a case where a remote computer is involved, the remote computer can be connected to a user computer through any kind of networks, including a LAN or a WAN, or can be connected to an external computer (for example, through an Internet using an Internet service provider).

The flowcharts and block diagrams in the accompanying drawings illustrate possible system architectures, functions, and operations that may be implemented by a system, a method, and a computer program product according to various embodiments of the present application. In this regard, each block in a flowchart or a block diagram may represent a module, a program, or a part of a code. The module, the program, or the part of the code includes one or more executable instructions used for implementing specified logic functions. In some implementations used as substitutes, functions annotated in blocks may alternatively occur in a sequence different from that annotated in an accompanying drawing. For example, actually two blocks shown in succession may be performed basically in parallel, and sometimes the two blocks may be performed in a reverse sequence. This is determined by a related function. It is also be noted that each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The units described in the embodiments of the present application can be implemented through software or hardware. The names of the units/modules do not constitute a limitation on the units in a situation.

The functions described herein above may be performed, at least in part, by one or a plurality of hardware logic components. For example, nonrestrictively, example hardware logic components that can be used include: a Field Programmable Gate Array (FPGA), an Application Specific Integrated Circuit (ASIC), Application Specific Standard Parts (ASSP), a System on Chip (SOC), a Complex Programmable Logic Device (CPLD), and the like.

In the context of the present application, a machine-readable medium may be a tangible medium that may include or store a program for use by an instruction execution system, apparatus, or device or in connection with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable medium may include an electrical connection based on one or more wires, a portable computer disk, a hard disk drive, a RAM, a ROM, an EPROM or flash memory, an optical fiber, a CD-ROM, an optical storage device, a magnetic storage device, or any suitable combinations of the above contents.

It should be noted that the various embodiments in this specification are described in a progressive manner, and each embodiment focuses on differences from other embodiments. The same and similar parts between all the embodiments can be referred to each other. Since the system or apparatus disclosed in the embodiments correspond to the method disclosed in the embodiments, the apparatus is described simply, and related parts are found in some of the explanations of the method.

It should be understood that in the present application, "at least one" means one or more, and "plurality" means two or more. The term "and/or" is used for describing an association relationship of related objects, indicating that there are three types of relationships. For example, "A and/or B" can represent: only A exists, only B exists, and A and B exist simultaneously, where A and B can be singular or plural. The character "/" usually indicates an "or" relation between associated objects. The term "at least one of the following items" or its similar expression means any combination of these items, including any combination of a single item or a plurality of items. For example, at least one of a, b, or c can represent: a, b, c, "a and b", "a and c", "b and c", or "a and b and c", where a, b, and c can be singular or plural.

It should be further noted that in this document, relationship terms such as first and second are used solely to distinguish one entity or operation from another entity or operation without necessarily requiring or implying any actual such relationship or order between such entities or operations. Furthermore, the terms "include", "including", or any other variation thereof, are intended to encompass a non-exclusive inclusion, such that a process, method, article, or device that includes a list of elements does not include only those elements but may include other elements not explicitly listed or inherent to such process, method, article, or device. Without further limitation, an element defined by the phrase "including a/an..." does not exclude the presence of another identical elements in the process, method, article or device that includes the element.

The steps of the method or algorithm described in conjunction with the embodiments disclosed herein can be implemented directly using hardware, software modules executed by the processor, or a combination thereof. The software modules can be placed in a RAM, an internal memory, a ROM, an EPROM, EEPROM, a register, a hard disk drive, a removable disk, a CD-ROM, or a storage medium in any other form known in the technical field.

The above explanations of the disclosed embodiments enable those skilled in the art to implement or use the present application. The various modifications to these embodiments will be apparent to those skilled in the art, and the general principles defined herein can be implemented in other embodiments without departing from the spirit or scope of the present application. Thus, the present invention is not limited to these embodiments shown herein, but accords with the broadest scope consistent with the principles and novel features disclosed herein.

## Claims

1. A video playing method, comprising:
displaying an information aggregation interface, wherein event identification information of at least one candidate hot event is displayed on the information aggregation interface, the at least one candidate hot event comprises a first hot event, and the event identification information of the first hot event is in a selected state;
displaying at least one candidate video identification corresponding to the first hot event on the information aggregation interface, wherein different candidate video identifications correspond to different pieces of video data, the at least one candidate video identification comprises a first video identification and a second video identification, the first video identification is in a selected state, and the second video identification is in an unselected state; and
playing video data corresponding to the first video identification on the information aggregation interface.

2. The method according to claim 1, further comprising:
receiving a selection operation for the second video identification;
switching the selected state of the first video identification to an unselected state, and switching the unselected state of the second video identification to a selected state; and
switching the video data played on the information aggregation interface to video data corresponding to the second video identification.

3. The method according to claim 1, wherein displaying the at least one candidate video identification corresponding to the first hot event on the information aggregation interface comprises:
displaying the at least one candidate video identification corresponding to the first hot event on the information aggregation interface in a first arrangement direction;
wherein the method further comprises:
in response to a triggering operation for the first video identification, displaying a video display interface; or
in response to a triggering operation for the event identification information of the first hot event, displaying the video display interface; or
in response to a triggering operation for the video data corresponding to the first video identification, displaying the video display interface;
wherein video data corresponding to the first video identification is displayed on the video display interface, and the video display interface is used for displaying the at least one candidate video identification in a second arrangement direction.

4. The method according to claim 3, further comprising:
receiving a selection operation for the second video identification on the video display interface; and
switching the video data that is played on the video display interface and corresponds to the first video identification to video data corresponding to the second video identification.

5. The method according to claim 3, wherein event associated information of the first hot event and/or video associated information of the video data corresponding to the first video identification are further displayed on the video display interface.

6. The method according to any of claims 3 to 5, further comprising: after displaying the video display interface,
in response to a preset screen clear condition being satisfied, performing screen clear processing on the video display interface to cause that the at least one candidate video identification does not exist on the video display interface after the screen clear processing.

7. The method according to claim 6, further comprising: after performing the screen clear processing on the video display interface,
in response to a first event switching operation for the video display interface, updating displayed content on the video display interface to to-be-displayed video data corresponding to the second hot event, wherein the second hot event is a next hot event or a previous hot event corresponding to the first hot event.

8. The method according to claim 3, further comprising: after displaying the video display interface,
in response to a second event switching operation for triggering the video display interface, updating displayed content on the video display interface to a to-be-displayed object corresponding to the second hot event, wherein the second hot event is a next hot event or a previous hot event corresponding to the first hot event.

9. The method according to claim 3, further comprising: after displaying the video display interface,
in response to a preset operation for triggering the video display interface, displaying a video playing control interface; and
displaying, on the video playing control interface, at least one information aggregation card corresponding to some or all of the at least one candidate hot event.

10. The method according to claim 9, further comprising:
in response to a triggering operation for a target aggregation card of the at least one information aggregation card, displaying to-be-played video data corresponding to the target aggregation card on the video playing control interface.

11. A video playing apparatus, comprising:
a first display unit, configured to display an information aggregation interface, wherein event identification information of at least one candidate hot event is displayed on the information aggregation interface, the at least one candidate hot event comprises a first hot event, and the event identification information of the first hot event is in a selected state;
a second display unit, configured to display at least one candidate video identification corresponding to the first hot event on the information aggregation interface, wherein different candidate video identifications correspond to different pieces of video data, the at least one candidate video identification comprises a first video identification and a second video identification, the first video identification is in a selected state, and the second video identification is in an unselected state; and
a video playing unit, configured to play video data corresponding to the first video identification on the information aggregation interface.

12. An electronic device, comprising: a processor and a memory, wherein
the memory is configured to store instructions or computer programs; and
the processor is configured to execute the instructions or the computer programs stored in the memory to cause the electronic device to perform the method according to any of claims 1 to 10.

13. A computer-readable medium, having instructions or a computer program stored thereon, wherein when the instructions or the computer program is run on a device, the device is caused to perform the method according to any of claims 1 to 10.
